# FASCICULE DE BREVET EUROPEEN

(11) **EP 2 144 093 B1**
(45) Date de publication et mention de la délivrance du brevet: **28.09.2011**
(21) Numéro de dépôt: 09290455.6
(22) Date de dépôt: 16.06.2009
(51) Int. Cl.: G02B 3/02, G02B 5/09, G02B 5/10, B24B 13/00

(54) **Procédé de façonnage d'un élément optique asphérique**
Verfahren zur Formung eines asphärischen optischen Elements
Method of forming a non-spherical optical element

(30) Priorité: 20.06.2008 FR 0803467
(43) Date de publication de la demande: 13.01.2010
(73) Titulaire: Société Européenne de Systèmes Optiques, 13090 Aix-en-Provence Cedex 3 (FR); Centre National de la Recherche Scientifique, 75016 Paris (FR); Université de Provence - Aix Marseille 1, 13331 Marseille (FR)
(72) Inventeur: de Mollerat du Jeu, Christian, 13290 Les Milles (FR); Carre, Jean-François, 84120 Pertuis (FR); Ferrari, Marc, 13004 Marseille (FR); Lemaitre, Gérard, 13100 Aix en Provence (FR); Hugot, Emmanuel, 13109 Simiane Collongue (FR)
(74) Mandataire: Priori, Enrico

(56) Documents cités:
- FR-A1- 2 626 208
- GB-A- 2 163 076
- US-B1- 7 229 178
- NELSON JERRY E ET AL: "STRESSED MIRROR POLISHING - 2. FABRICATION OF AN OFF-AXIS SECTION OF A PARABOLOID." APPLIED OPTICS 1980 JUL 15, vol. 19, no. 14, 15 juillet 1980 (1980-07-15), pages 2341-2352, XP002552059
- STEPHEN F. SPORER: "TMT: stressed mirror polishing fixture study" PROC. SPIE, vol. 6267, 26 juin 2006 (2006-06-26), XP008102616

## Description

L'invention porte sur un procédé de façonnage d'un élément optique asphérique, tel qu'une lentille ou un miroir. L'invention s'applique notamment au façonnage de segments de miroirs segmentés de grandes dimensions.

Le façonnage d'éléments optiques asphériques est un procédé long, difficile et onéreux, en particulier lorsqu'il est nécessaire d'obtenir des surfaces asphériques complexes, de grandes dimensions (par exemple, de diamètre supérieur ou égal à 1 m), ayant une géométrie définie très précisément et un niveau de rugosité faible.

Ces conditions se rencontrent, par exemple, lors de la fabrication des segments pour la réalisation de très grands miroirs segmentés, pouvant atteindre des diamètres de plusieurs dizaines de mètres et servant comme miroirs principaux des télescopes astronomiques de dernière génération (« ELT » ou « Extremely Large Telescopes », c'est à dire télescopes extrêmement grands). Ces miroirs sont constitués d'un nombre important (plusieurs centaines ou milliers) de segments, généralement de forme hexagonale, assemblés bord à bord. La position et l'orientation de chaque segment peut être commandé par des actionneurs avec une précision et une résolution nanométrique. Chaque segment est en fait un miroir asphérique hors-axe, de dimensions relativement importantes (de l'ordre du mètre ou plus).

Une première technique pouvant être utilisée pour le façonnage de tels éléments optiques asphériques est le doucissage-polissage numérique, à l'aide d'outils de petites dimensions montés sur des bras robotiques. Cette méthode a été utilisée, notamment, pour la fabrication des éléments du télescope « Gran Telescopio Canarias » : voir l'article de R. GEYL et al: « Gran Telescopio Canarias optics Manufacture: Final report » Proc. SPIE vol.6273, 2006. Elle présente l'inconvénient d'introduire des nombreux défauts de surface à des fréquences spatiales élevées, défauts qui doivent être corrigés par une étape ultérieure d'usinage par bombardement ionique. Il en résulte une fabrication longue et coûteuse.

Une deuxième technique, connue sous le nom de « polissage sous contraintes » (« Stressed Mirror Polishing » ou SMP en langue anglaise), a été proposée en 1980 par J. Lubliner et J. Nelson. Cette technique, utilisée pour le télescope américain Keck et préconisé pour le futur télescope géant TMT, permet d'obtenir rapidement des surfaces optiques complexes, très asphériques, en se ramenant à un polissage sphérique simple. Conformément à cette technique, une ébauche à façonner, ayant une surface optique de géométrie plane ou sphérique, est déformé mécaniquement de manière à présenter une asphéricité complémentaire à celle souhaité. Ensuite, la surface optique déformée est façonnée par abrasion (elle est doucie et polie) jusqu'à la rendre sphérique. Enfin, on permet à l'ébauche de se relaxer pour revenir dans son état de repos. La surface optique, qui avait acquis un profil sphérique lorsque l'ébauche était dans son état déformé, prend donc la forme asphérique souhaitée.

La technique SMP est plus rapide par rapport au polissage numérique par petits outils, et permet d'obtenir des surfaces de meilleure qualité. Cependant, les contraintes de déformation de l'ébauche ne sont pas parfaitement homogènes, et cela provoque l'apparition de défauts à la périphérie de la surface optique façonnée. Pour remédier à cet inconvénient il est possible d'utiliser une ébauche de diamètre supérieur à celui de l'élément optique voulu, pour pouvoir en découper un anneau périphérique correspondant à la zone où se concentrent ces défauts, zone dont la largeur est de l'ordre de l'épaisseur de l'ébauche (typiquement, plusieurs dizaines de millimètres). Cela augmente le coût de l'élément optique fini.

En variante ou en complément, il est possible de corriger les défauts de surface par une étape ultérieure d'usinage par bombardement ionique. Mais cette opération introduit, elle aussi, un surcoût.

La technique SMP est décrite en détail par les articles suivants :
- J. Lubliner, J. Nelson: « Stressed mirror polishing. 1: A technique for producing nonaxisymmetric mirrors », Applied Optics, vol.19, n°14, p 2332-2340, 1980 ;
- J. Nelson et al : « Stressed mirror polishing. 2: Fabrication of an off-axis section of a paraboloid », Applied Optics, vol.19, n°14, p 2341-2352, 1980 ; et
- F.S. Sporer « TMT - Stressed mirror polishing fixture study » Proc. SPIE vol.6267, 2006.

L'invention vise à perfectionner cette méthode de façonnage d'éléments optiques asphériques.

Plus particulièrement, un but de l'invention est de procurer un procédé de façonnage d'un élément optique asphérique introduisant moins de défauts de surface que la technique SMP connue de l'art antérieur.

Un autre but de l'invention est de minimiser l'épaisseur de la région périphérique de l'ébauche qui doit être découpée à la fin de l'opération de façonnage, voire de la supprimer complètement.

Encore un autre but de l'invention est de rendre la mise en oeuvre d'un procédé de type SMP plus simple et moins couteuse.

Conformément à l'invention, au moins un des buts précités peut être atteint pas un procédé de façonnage d'un élément optique asphérique comportant les étapes consistant à :
- fixer une ébauche d'élément optique, présentant une surface optique destinée à être façonnée, à l'intérieur d'une bague, la surface optique de l'ébauche dépassant d'un bord de ladite bague ;
- appliquer des efforts au périmètre de la bague de manière à la déformer de manière contrôlée, en déformant également la surface optique de l'ébauche fixée à son intérieur ;
- façonner par abrasion ladite surface optique déformée, de manière à lui redonner une forme sphérique ou planaire ; et
- extraire l'ébauche de la bague, de manière à relâcher les contraintes déformant ladite surface optique façonnée pour permettre à cette dernière d'acquérir la forme asphérique souhaitée.

Selon des modes de réalisation avantageux de l'invention :
- L'ébauche peut être fixée à l'intérieur de ladite bague par collage sur tout son périmètre.
- La surface optique de l'ébauche peut dépasser de 0,5 à 5 mm, et de préférence de 1 à 2 mm, dudit bord de la bague.
- Ladite bague peut présenter une épaisseur maximale comprise entre 1 et 5 fois, et de préférence entre 2 et 3 fois, celle de l'ébauche.
- Ladite bague peut présenter une surépaisseur au niveau d'une région périphérique, ladite surépaisseur s'étendant dans une direction opposée à celle de ladite surface optique.
- Ladite bague peut présenter une largeur, mesurée dans une direction radiale, au moins égale à l'épaisseur de ladite ébauche, et de préférence comprise entre une et deux fois ladite épaisseur.
- L'ébauche peut être réalisée en verre ou en matériau céramique, tandis que la bague est réalisée en matériau métallique.
- Des bras s'étendant radialement (vers l'extérieur ou vers l'intérieur) peuvent être fixés au périmètre de ladite bague pour appliquer lesdits efforts et des moments afin de déformer la bague et l'ébauche. En particulier, ces bras peuvent être disposés uniformément le long du périmètre de ladite bague et sont en nombre compris entre 4 et 24, et de préférence entre 6 et 12.
- Lesdits bras peuvent être orientés radialement vers l'extérieur ou, avantageusement, vers l'intérieur de ladite bague.
- Ladite ébauche peut présenter une forme sensiblement circulaire. Dans ce cas, le procédé peut comporter également une étape ultérieure de découpe de l'ébauche façonnée pour lui donner une forme sensiblement hexagonale.
- Le procédé peut, en tout cas, comporter également une étape ultérieure de découpe de l'ébauche façonnée pour enlever une région périphérique de cette dernière.
- Ladite étape de façonnage par abrasion peut comporter au moins une opération de doucissage et une opération de polissage.
- Le procédé peut comporter également une étape ultérieure de polissage de finition au moyen d'un robot de polissage.
- Ledit élément optique peut être, en particulier, un élément de miroir composite.

D'autres caractéristiques, détails et avantages de l'invention ressortiront à la lecture de la description faite en référence aux dessins annexés donnés à titre d'exemple et qui représentent, respectivement :
- La figure 1, une vue en élévation d'une ébauche d'élément optique, fixée dans une bague et prête pour être déformée et façonnée conformément au procédé de l'invention ;
- La figure 2, une vue de détail en section de l'ensemble constitué par l'ébauche et la bague de la figure 1 ;
- La figure 3, une vue en détail en section d'un ensemble constitué par une ébauche et une bague selon un mode de réalisation alternatif de l'invention ; et
- La figure 4, une vue en élévation d'un ensemble ébauche-bague selon un mode de réalisation alternatif de l'invention.

Le procédé de l'invention permet de fabriquer un élément optique asphérique, tel qu'un miroir ou une lentille, à partir d'une ébauche réalisée en un matériau adapté, typiquement un verre ou une céramique.

Une ébauche 1 adaptée pour la mise en oeuvre de l'invention présente une forme généralement en plaque, c'est à dire avec une dimension significativement inférieure (d'un ordre de grandeur ou plus) aux deux autres. Typiquement, l'ébauche 1 peut avoir une épaisseur de l'ordre de 10 - 100 mm, par exemple de 50 mm, et un diamètre de l'ordre de 1000 - 2000 mm, voire davantage.

L'ébauche 1 a de préférence une forme circulaire, pour des raisons qui serons expliquées plus bas, et cela même si l'élément optique à fabriquer doit avoir une forme différente (par exemple hexagonale). Avantageusement, le diamètre de l'ébauche est supérieur à celui de l'élément optique fini. Par exemple, pour fabriquer un miroir hexagonal de 1500 mm de diamètre, on peut partir d'une ébauche dont le diamètre est de 1600 mm.

Ainsi, l'ébauche 1 a une forme généralement cylindrique, de diamètre d₁ et hauteur (épaisseur) e₁<<d₁, et présente deux surfaces principales 10, 11 et une surface périphérique ou latérale 12.

La surface principale 10 est la « surface optique » qui doit être façonnée. De préférence, à l'origine elle a une forme sphérique ou planaire.

On considèrera ici que la surface principale opposée (face arrière) 11 est plane.

Conformément à la technique SMP conventionnelle, des bras orientés radialement peuvent être fixés, par exemple par collage, à la surface latérale 12 de l'ébauche 1, afin de permettre la déformation de cette dernière par l'application d'efforts et de moments. Dans l'article précité de J. Lubliner et al. il est démontré qu'une déformation adaptée au but recherché peut être obtenue en appliquant auxdits bras uniquement : des forces de cisaillement, orientées parallèlement à la surface latérale 12 de l'ébauche et perpendiculairement à ses faces principales 10, 11 ; et des moments de flexion dont les axes sont orientés tangentiellement par rapport à la dite surface latérale 12 et parallèlement aux faces principales 10, 11.

Comme expliqué plus haut, les efforts appliqués à l'ébauche 1 par l'intermédiaire des bras sont choisis de manière à donner à la surface optique 10 une asphéricité complémentaire à celle souhaité. La déformée (écart par rapport à une forme sphérique) peut atteindre des valeurs de plusieurs centaines de micromètres, et être contrôlée précisément par mesure interférométrique sur la face optique 10 elle-même ou sur la face opposée 11 de l'ébauche. Typiquement, la déformation de la surface optique 10 introduit des aberrations de type astigmatisme, coma et éventuellement défocalisation sphérique.

Ensuite, un procédé conventionnel de façonnage par abrasion (doucissage suivi par polissage) est mis en oeuvre, pour rendre planaire ou sphérique la surface 10 déformée. Le relâchement des contraintes provoque la relaxation de l'ébauche : la surface 10 façonné prend ainsi la forme asphérique souhaitée.

La surface 10 peut être caractérisée, notamment par interférométrie, et si nécessaire une nouvelle étape de polissage sous contrainte peut être mise en oeuvre.

Ce procédé souffre de certaines imperfections.

Premièrement, les forces et moments de déformation ne sont pas appliqués de manière uniforme sur le contour de l'ébauche, mais sont concentrés au niveau des bras. Cela engendre une inhomogénéité des contraintes, et donc des déformations, à la périphérie de l'ébauche. Il en résulte, après façonnage, une « dentelure », c'est à dire une modulation périodique de la surface optique le long de la circonférence de la pièce.

En outre, les efforts exercés par les bras sur l'ébauche sont localement très intenses, et peuvent engendrer des défauts de surface à haute fréquence spatiale, voire provoquer des ruptures, ce qui réduit le domaine de déformation accessible.

Pour ces raisons il est préconisé de découper un anneau périphérique de l'ébauche façonnée, ayant une largeur au moins de l'ordre de l'épaisseur de ladite ébauche ou plus.

Les inventeurs se sont rendus compte du fait que ces inconvénients peuvent être supprimés, ou au moins sensiblement atténués, en fixant l'ébauche à façonner à l'intérieur d'une bague, et en appliquant les efforts et moments de déformation à ladite bague. De cette manière, les contraintes de déformation sont transmises à l'ébauche, mais seulement après avoir été « moyennées » et homogénéisées à l'intérieur de la bague. On évite ainsi aussi bien l'effet de dentelure que les défauts de haute fréquence spatiale induits par la concentration des efforts sur la surface latérale de l'ébauche.

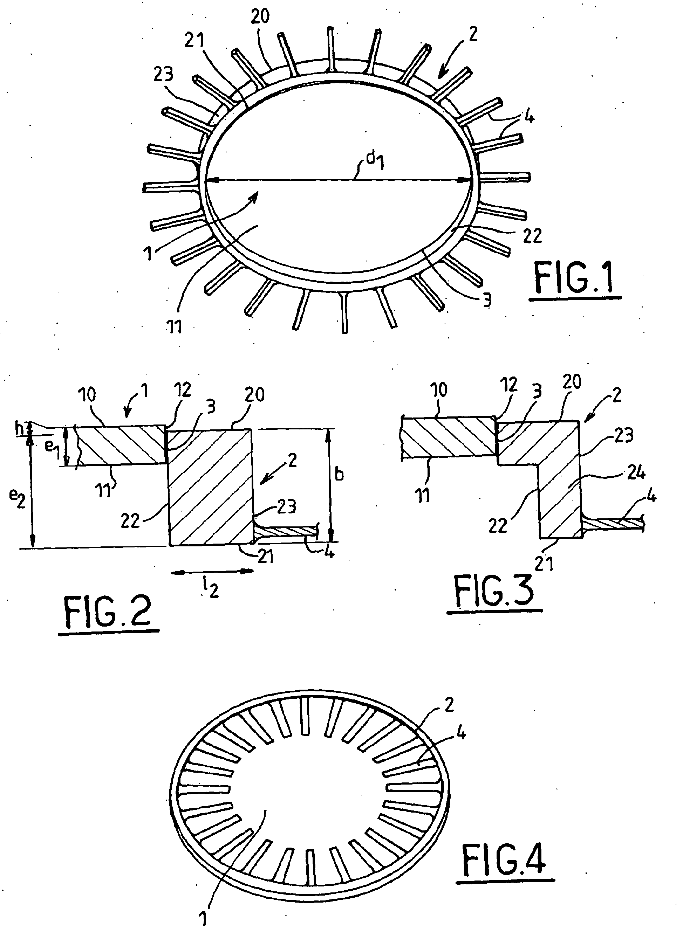

La figure 1 représente une ébauche 1 fixée, par l'intermédiaire d'une couche de colle 3, à la surface intérieure 22 d'une bague 2 en matériau métallique, par exemple en invar. Le matériau constituant la bague est choisi de façon que l'assemblage réalisé soit stable sur la durée des opérations de façonnage et dans l'environnement de l'atelier. En particulier, la stabilité en température de l'ensemble est optimisée.

Des bras 4, s'étendant radialement vers l'extérieur, sont fixés à la surface extérieure 23 de la bague, pour appliquer des forces et des moments de déformation. Les contraintes induites par l'application de ces forces et moments, homogénéisées à l'intérieur de la bague 2, sont , transmises à l'ébauche 1 par l'intermédiaire de la couche de colle 3.

Comme le montre la figure 4, les bras peuvent également s'étendre vers l'intérieur de la bague (au-dessus ou au-dessous de l'ébauche). Cette solution permet la réalisation d'un ensemble plus compact, mais est difficile à mettre en oeuvre si le nombre de bras est élevé.

Typiquement, chaque bras porte deux actionneurs : un premier se trouvant à la jonction entre le bras et la bague, pour appliquer des efforts à cette dernière ; et un deuxième à l'extrémité distale du bras pour appliquer des moments. En fonction de la déformation qui doit être obtenue, l'application de moments peut ne pas être nécessaire : dans ce cas, il n'est pas indispensable de prévoir des bras, les actionneurs pouvant être fixés directement à la surface extérieure de la bague. Des moments de faible entité peuvent également être appliquée en l'absence de bras, si les actionneurs fixés directement à la bague sont disposés au-dessus ou au-dessous du plan médian de l'ébauche.

En tout cas, le nombre de bras ou, en l'absence de bras, d'actionneur, est généralement de quatre au moins, et de préférence de six au moins.

Une simulation numérique a montré qu'une déformation de 162 µm sur un miroir en céramique « Zerodur » de 1500 mm de diamètre peut être obtenue sans que les contraintes dans l'ébauche dépassent les 2 MPa, en utilisant 24 bras et une bague en invar ayant un diamètre externe de 1600 mm. Par comparaison, si les bras sont fixés directement à la surface latérale de l'ébauche, comme dans les procédés de l'art antérieur, les contraintes à l'intérieur de cette dernière atteignent les 10 MPa, ce qui n'est pas acceptable.
La figure 1 représente l'ensemble bague - ébauche vu du côté de la face arrière 11 de cette dernière. Sur la figure, les références 20 et 21 indiquent les bords « supérieur » et « inférieur » de la bague, situés respectivement du côté de la face optique 10 et de la face arrière 11 de l'ébauche.
La figure 2 représente plus en détail la connexion entre l'ébauche 1 et la bague 2. On peut remarquer que la bague 2 présente une épaisseur e₂ qui est généralement supérieure ou égale à celle (e₁) de l'ébauche. A titre indicatif, e₂ peut être comprise entre 1 et 5 fois, et de préférence entre 2 et 3 fois, e₁.

Cependant, la surface optique 10 de l'ébauche dépasse d'une hauteur h du bord supérieur 20 de la bague. Cette hauteur, typiquement de l'ordre de 0,5 à 5 mm, et de préférence comprise entre 1 à 2 mm, doit être suffisante pour éviter tout contact entre l'élément de polissage de la surface optique 10 et la bague 2.

La largeur I₂ de la bague est généralement au moins de l'ordre de l'épaisseur de l'ébauche (typiquement comprise entre 1 et 2 fois ladite épaisseur, plus généralement entre 0,5 et 2 fois, parfois davantage). Une largeur insuffisante de la bague ne permettrait pas une homogénéisation satisfaisante des contraintes ; par contre une largeur excessive rendrait plus difficile la déformation de l'ensemble bague - ébauche.

Les bras 4 d'application des forces et des moments de flexion sont de préférence fixés à la bague à proximité du bord inférieur (c'est à dire opposé à la surface optique 10) de celle-ci, de façon à ce que la bague répartisse au mieux les contraintes dans le contour 12 de l'ébauche par l'intermédiaire de la couche de colle.

L'utilisation de la bague 1 permet de diminuer le nombre de bras nécessaire pour obtenir la déformation de l'ébauche, et cela grâce à l'effet d'homogénéisation des contraintes discuté plus haut. Ainsi, l'invention permet d'utiliser un nombre de bras compris entre 4 - 6 et 12 dans un cas où, conformément aux techniques de l'art antérieure, 24 bras ou plus auraient été nécessaires. Cette diminution du nombre de bras permet de diminuer le nombre de paramètres à régler : la mise en oeuvre du procédé s'en trouve simplifiée, et le risque d'erreurs de réglage est réduit.

Par ailleurs, la diminution du nombre de bras facilite grandement la mise en oeuvre du mode de réalisation de la figure 4, dans lequel lesdits bras sont orientés vers l'intérieur de l'anneau pour réduire l'encombrement de l'ensemble.

Comme expliqué plus haut, dans certains cas les bras peuvent même être absents, les déformations de l'ébauche étant induite par quatre actionneurs ou plus fixés directement à la surface extérieure de la bague.

La couche de colle 3 est de préférence disposée de manière uniforme sur tout le contour 12 de l'ébauche 1. Cela permet à la fois de maximiser l'uniformité de la déformation de cette dernière et de minimiser l'intensité de contraintes.

En tout cas, l'ébauche doit pouvoir être détachée de la bague à la fin de l'opération de façonnage. Par exemple, la colle peut être dissoute par utilisation d'un solvant, ou se décomposer sous l'effet de la chaleur.

La figure 3 représente un mode de réalisation alternatif de l'invention, dans lequel la bague 2 n'a pas une section transverse rectangulaire, mais présente une région de surépaisseur 24 dans sa partie périphérique. Ce mode de réalisation permet d'alléger la bague, qui est un outil lourd.

Dans le mode de réalisation représenté sur la figure 1, aussi bien l'ébauche 1 que la bague 2 présentent une symétrie circulaire. Il s'agit là d'un mode de réalisation préféré, car une géométrie de ce type permet de mieux contrôler la déformation obtenue et d'éviter la concentration des contraintes. Un élément optique de forme différente (notamment hexagonale) peut être obtenu par découpe de l'ébauche circulaire façonnée.

En variante, cependant, il est possible d'utiliser des ébauches et/ou des bagues de formes différentes (hexagonales, carrées...). Par ailleurs, il n'est pas nécessaire que la largeur I₂ de la bague soit constante ; on pourrait par exemple envisager d'utiliser une bague ayant une surface intérieure 22 à base hexagonale et une surface extérieure à base circulaire.

## Revendications

1. Procédé de façonnage d'un élément optique asphérique comportant les étapes consistant à :
- fixer une ébauche (1) d'élément optique, présentant une surface optique (10) destinée à être façonnée, à l'intérieur d'une bague (2), la surface optique de l'ébauche dépassant d'un bord (20) de ladite bague ;
- appliquer des efforts au périmètre (23) de la bague de manière à la déformer de manière contrôlée, en déformant également la surface optique de l'ébauche fixée à son intérieur ;
- façonner par abrasion ladite surface optique déformée, de manière à lui redonner une forme sphérique ou planaire ; et
- extraire l'ébauche de la bague, de manière à relâcher les contraintes déformant ladite surface optique façonnée pour permettre à cette dernière d'acquérir la forme asphérique souhaitée.

2. Procédé selon la revendication 1, dans lequel l'ébauche est fixée à l'intérieur de ladite bague par collage sur tout son périmètre (12).

3. Procédé selon l'une des revendications précédentes, dans lequel la surface optique de l'ébauche dépasse de 0,5 à 5 mm, et de préférence de 1 à 2 mm, dudit bord de la bague.

4. Procédé selon l'une des revendications précédentes, dans lequel ladite bague présente une épaisseur maximale (e₂) comprise entre 1 et 5 fois, et de préférence entre 2 et 3 fois, celle (e₁) de l'ébauche.

5. Procédé selon l'une des revendications précédentes, dans lequel ladite bague présente une surépaisseur (24) au niveau d'une région périphérique, ladite surépaisseur s'étendant dans une direction opposée à celle de ladite surface optique.

6. Procédé selon l'une des revendications précédentes, dans lequel ladite bague présente une largeur (I₂), mesurée dans une direction radiale, au moins égale à l'épaisseur de ladite ébauche, et de préférence comprise entre 1 et 2 fois ladite épaisseur.

7. Procédé selon l'une des revendications précédentes, dans lequel l'ébauche est réalisée en verre ou en matériau céramique, tandis que la bague est réalisée en matériau métallique.

8. Procédé selon l'une des revendications précédentes, dans lequel des bras (4) s'étendant radialement sont fixés au périmètre (23) de ladite bague pour appliquer lesdits efforts et des moments afin de déformer la bague et l'ébauche.

9. Procédé selon la revendication 8 dans lequel lesdits bras sont disposés uniformément le long du périmètre de ladite bague et sont en nombre compris entre 4 et 24, et de préférence entre 6 et 12.

10. Procédé selon l'une des revendications 8 ou 9, dans lequel lesdits bras sont orientés radialement vers l'intérieur de ladite bague.

11. Procédé selon l'une des revendications précédentes, dans lequel ladite ébauche présente une forme sensiblement circulaire.

12. Procédé selon la revendication 11, comportant également une étape ultérieure de découpe de l'ébauche façonnée pour lui donner une forme sensiblement hexagonale.

13. Procédé selon l'une des revendications précédentes, comportant également une étape ultérieure de découpe de l'ébauche façonnée pour enlever une région périphérique de cette dernière.

14. Procédé selon l'une des revendications précédentes, dans lequel ladite étape de façonnage par abrasion comporte au moins une opération de doucissage et une opération de polissage.

15. Procédé selon l'une des revendications précédentes, comportant également une étape ultérieure de polissage de finition au moyen d'un robot de polissage.

16. Procédé selon l'une des revendications précédentes, dans lequel ledit élément optique est un élément de miroir composite.

## Claims

1. A method of shaping an aspherical optical element, the method comprising the following steps:
• fastening an optical element blank (1), presenting an optical surface (10) that is to be shaped, to the inside of a ring (2), the optical surface of the blank projecting beyond an edge (20) of said ring;
• applying forces to the perimeter (23) of the ring in such a manner as to deform it in controlled manner, thereby also deforming the optical surface of the blank fastened to its inside;
• shaping said deformed optical surface by abrasion so as to restore it to a shape that is spherical or planar; and
• extracting the blank from the ring so as to release the stresses deforming said shaped optical surface, thereby enabling it to acquire the desired aspherical shape.

2. A method according to claim 1, wherein the blank is fastened to the inside of said ring by adhesive all around its perimeter (12).

3. A method according to either preceding claim, wherein the optical surface of the blank projects 0.5 mm to 5 mm, and preferably 1 mm to 2 mm from said edge of the ring.

4. A method according to any preceding claim, wherein said ring presents a maximum thickness (e₂) lying in the range 1 to 5 times, and preferably in the range 2 to 3 times the thickness (e₁) of the blank.

5. A method according to any preceding claim, wherein said ring presents extra thickness (24) in a peripheral region, said extra thickness extending in a direction away from said optical surface.

6. A method according to any preceding claim, wherein said ring presents a width (ℓ₂) measured in a radial direction that is not less than the thickness of said blank, and that preferably lies in the range 1 to 2 times said width.

7. A method according to any preceding claim, wherein the blank is made of glass or of ceramic material, while the ring is made of metal.

8. A method according to any preceding claim, wherein radially-extending arms (4) extend are fastened to the perimeter (23) of said ring for the purpose of applying said forces and moments in order to deform the ring and the blank.

9. A method according to claim 8, wherein said arms are disposed uniformly all around the perimeter of said ring and wherein the number of arms lies in the range 4 to 24, and preferably in the range 6 to 12.

10. A method according to claim 8 or claim 9, wherein said arms extend radially towards the inside of said ring.

11. A method according to any preceding claim, wherein said blank presents a shape that is substantially circular.

12. A method according to claim 11, also including a subsequent step of cutting the shaped blank so as to give it a shape that is substantially hexagonal.

13. A method according to any preceding claim, also including a subsequent step of cutting the shaped blank so as to remove a peripheral region therefrom.

14. A method according to any preceding claim, wherein said shaping step comprises at least a grinding operation and a polishing operation.

15. A method according to any preceding claim, also including a subsequent step of finishing polishing by means of a polisher robot.

16. A method according to any preceding claim, wherein said optical element is a composite mirror element.

## Patentansprüche

1. Verfahren zum Formen eines asphärischen optischen Elements, umfassend die Schritte:
- Befestigen eines Rohlings (1) eines optischen Elements, der eine zu formende optische Oberfläche (10) aufweist, im Inneren eines Rings (2), wobei die optische Oberfläche des Rohlings über einen Rand (20) des Rings hinausragt;
- Übertragen einer mechanischen Beanspruchung auf den Umfang (23) des Rings derart, dass dieser kontrolliert verformt wird, wobei gleichzeitig die optische Oberfläche des Rohlings verformt wird, der in seinem Inneren befestigt ist;
- Bearbeiten der verformten optischen Oberfläche durch Schleifen derart, dass ihr wieder eine sphärische oder plane Oberfläche verliehen wird; und
- Entnehmen des Rohlings aus dem Ring derart, dass die Spannungen, die die geformte optische Oberfläche verformen, aufgehoben werden, um letzterer zu ermöglichen, die gewünschte asymmetrische Form anzunehmen.

2. Verfahren nach Anspruch 1, wobei der Rohling im Inneren des Rings durch Klebung auf seinem gesamten Umfang (12) befestigt ist.

3. Verfahren nach einem der vorherigen Ansprüche, wobei die optische Oberfläche des Rohlings um 0,5 bis 5 mm, und vorzugsweise um 1 bis 2 mm über den Rand des Rings hinausragen.

4. Verfahren nach einem der vorherigen Ansprüche, wobei der Ring eine maximale Dicke (e₂) aufweist, die zwischen dem 1- bis 5-Fachen, und vorzugsweise zwischen dem 2- bis 3-Fachen derjenigen (e₁) des Rohlings liegt.

5. Verfahren nach einem der vorherigen Ansprüche, wobei der Ring eine Verdickung (24) in einem Umfangsbereichs aufweist, wobei sich die Verdickung in einer zu derjenigen der optischen Oberfläche entgegengesetzten Richtung erstreckt.

6. Verfahren nach einem der vorherigen Ansprüche, wobei der Ring eine Breite (I₂), gemessen in einer radialen Richtung, besitzt, die wenigstens gleich der Dicke des Rohlings ist und vorzugsweise zwischen dem 1- bis 2-Fachen dieser Dicke beträgt.

7. Verfahren nach einem der vorherigen Ansprüche, wobei der Rohling aus Glas oder einem keramischen Material gebildet ist, während der Ring aus einem metallischen Material gebildet ist.

8. Verfahren nach einem der vorherigen Ansprüche, wobei Greifer (4), die sich radial erstrecken, am Umfang (23) des Rings befestigt sind, um die Kräfte und Momente zum Verformen des Rings und des Rohlings auszuüben.

9. Verfahren nach Anspruch 8, wobei die Greifer gleichmäßig entlang des Umfangs des Rings angeordnet sind und in einer Zahl von 4 bis 24, vorzugsweise von 6 bis 12 vorliegen.

10. Verfahren nach einem der Ansprüche 8 oder 8, wobei die Greifer radial ins Innere des Rings gerichtet sind.

11. Verfahren nach einem der vorherigen Ansprüche, wobei der Rohling im Wesentlichen kreisförmig ist.

12. Verfahren nach Anspruch 11, das ferner einen anschließenden Schritt zum Schneiden des geformten Rohlings umfasst, um ihm eine im Wesentlichen hexagonale Form zu verleihen.

13. Verfahren nach einem der vorherigen Ansprüche, das ferner einen anschließenden Schritt zum Schneiden des geformten Rohlings umfasst, um einen Umfangsbereich des letzteren zu entfernen.

14. Verfahren nach einem der vorherigen Ansprüche, in dem der Schritt der Bearbeitung durch Schleifen wenigstens einen Arbeitsschritt der Politur und einen Arbeitsschritt der Feinpolitur umfasst.

15. Verfahren nach einem der vorherigen Ansprüche, das ferner einen anschließenden Schritt der Feinpolitur unter Verwendung eines Polierroboters umfasst.

16. Verfahren nach einem der vorherigen Ansprüche, wobei das optische Element ein Element eines Kompositspiegels ist.
